# EUROPÄISCHE PATENTSCHRIFT

(11) **EP 0 691 827 B1**
(45) Veröffentlichungstag und Bekanntmachung des Hinweises auf die Patenterteilung: **11.06.1997**
(21) Anmeldenummer: 94914259.0
(22) Anmeldetag: 21.03.1994
(51) Int. Cl.: A61C 17/06, F16F 15/08

(54) **VIBRATIONSDÄMPFENDE HALTERUNG FÜR EINEN DENTALABSCHEIDER**
VIBRATION-DAMPING SUPPORT FOR A DENTAL SEPARATOR
ATTACHE ANTIVIBRATILE POUR UN ASPIRATEUR-SEPARATEUR DENTAIRE

(30) Priorität: 30.03.1993 AT 637/93
(43) Veröffentlichungstag der Anmeldung: 17.01.1996
(73) Patentinhaber: Trawöger, Werner, 6173 Oberperfuss (AT); PREGENZER, Bruno, 6173 Oberperfuss (AT)
(72) Erfinder: Trawöger, Werner, 6173 Oberperfuss (AT); PREGENZER, Bruno, 6173 Oberperfuss (AT)
(74) Vertreter: Hofinger, Engelbert, DDr.
(86) Internationale Anmeldenummer: AT9400030
(87) Internationale Veröffentlichungsnummer: WO9422392

(56) Entgegenhaltungen:
- WO-A-89/04641

## Beschreibung

Die Erfindung betrifft eine vibrationsdämpfende Halterung für einen Dentalabscheider, der mindestens einen Eingang, mindestens einen Ausgang, und eine Zentrifuge aufweist, wobei die Halterung mit Leitungsanschlüssen versehen ist, und jeder Ein- und Ausgang des in die Halterung eingesetzten Abscheiders mit einem Leitungsanschluß der Halterung verbunden ist.

Eine derartige Halterung ist beispielsweise der WO 89/04641 zu entnehmen. Der dort gezeigte Abscheider besteht aus zwei Teileinheiten, wobei der eine Teil, der Saugluft vom Gemisch abscheidet und Feststoffe im Sammelbehälter sedimentiert, schubladenartig von der Halterung ausziehbar ist. Der zweite Teil umfaßt eine Zentrifuge, deren Ein- und Ausgang über elastische Schlauchstücke mit den Leitungsanschlüssen der Halterung verbunden ist, und die auf einer Auflageplatte aufliegt. Nach dem Entfernen der elastischen Schlauchstücke kann die Zentrifuge nach oben abgenommen werden. Dies ist verhältnismäßig umständlich, und die Erfindung hat es sich zur Aufgabe gestellt, eine Halterung der eingangs genannten Art so auszubilden, daß die Abnahme des Abscheiders einfacher erfolgen kann.

Erfindungsgemäß wird dies dadurch erreicht, daß die Halterung zwei Teile aufweist, wobei der erste Teil ortsfest montierbar und auf dem zweiten Teil der Abscheider abnehmbar anordenbar ist und daß die beiden Teile mittels vibrationsdämpfender Zwischenstücke miteinander verbunden sind. Da somit die vibrationsdämpfenden Zwischenstücke Bestandteile der Halterung sind, kann der Abscheider vom zweiten Teil der Halterung abgenommen werden, an dem er mit beliebigen Verbindungsmitteln fixiert ist.

Die beiden Teile der Halterung sind insbesondere aus einem ersten Kunststoff, beispielsweise einem Polyamid oder einem Polypropylen gefertigt und vorzugsweise im wesentlichen etwa U-förmig ausgebildet. Die vibrationsdämpfenden Zwischenstücke sind insbesondere aus einem thermoplastischen Elastomer auf Polyamid- oder Polypropylenbasis, die in Spritzgießanlagen gemeinsam mit dem ersten Kunststoff zu einem einstückigen Produkt verarbeitbar sind.

Bevorzugte Ausführungen sehen dabei vor, daß zumindest ein vibrationsdämpfendes Zwischenstück als elastisches Rohrstück oder als beweglich angeordnetes starres Rohrstück zwischen einer einem Eingang bzw. Ausgang des Abscheiders zugeordneten Öffnung im zweiten Teil der Halterung und einem Leitungsanschluß im ersten Teil der Halterung ausgebildet ist, sodaß sich das Öffnen von Schlauchkupplungen ebenfalls erübrigt.

Halterung und Abscheider bilden in dieser Ausführung eine äußerst kompakte Einheit mit geringstem Raumbedarf, wobei eine weitere bevorzugte Ausführung vorsieht, daß die Seitenstege des U-förmigen inneren Teiles eine Seitenführung für den schubladenartig ausziehbaren Abscheider bilden.

Wenn an den freien Enden des U-förmigen inneren Teiles der Halterung hintergreifbare Haltelaschen für einen Spannhebelverschluß ausgebildet ist, und/oder, wenn die Seitenstege des U-förmigen inneren Teiles in Abnahmerichtung des Abscheiders konvergierende Paßsitzflächen aufweisen, die von korrespondierenden Elementen des Abscheidergehäuses umgreifbar sind, so ergibt sich nach dem Einsetzen des Abscheiders eine dichte Verbindung zwischen jedem Ein- oder Ausgang und dem Leitungsanschluß der Halterung. Gegebenenfalls kann die Rohrstückmündung mit einem O-Ring bestückt sein. Alternativ ist vorgesehen, daß ein Dichtungsring aus dem Elastomer des Rohrstückes am inneren Teil der Halterung im Bereich der Mündung des Rohrstückes mitgespritzt ist.

Die Montagemöglichkeiten des Abscheiders werden erhöht, wenn zumindest ein elastisches Rohrstück in einem Eckbereich der Halterung angeordnet und mit zwei in verschiedene Richtungen weisenden Leitungsanschlüssen verbunden ist. Ein nicht benötigter Leitungsanschluß wird durch einen Stopfen verschlossen.

Die Seitenstege des ortsfest montierten etwa U-förmigen äußeren Teiles können auch unter 45° schrägliegend verlaufen. Anschlußstücke mit 45°-Abwinkelung können dann verdrehbar in die Leitungsanschlüsse eingesetzt werden, sodaß weiterführende Leitungen alle Lagen zwischen horizontal und vertikal einnehmen können.

Nachstehend wird nun die Erfindung anhand der Figuren der beiliegenden Zeichnungen näher beschrieben, ohne darauf beschränkt zu sein.

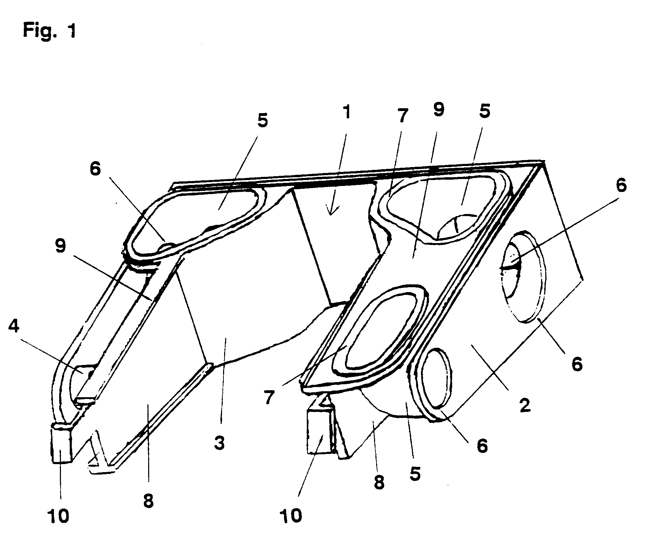

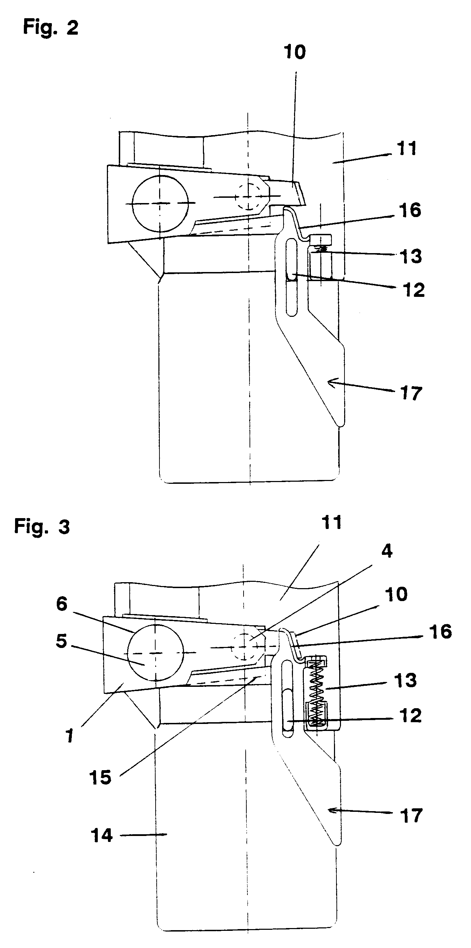

Die Fig. 1 zeigt eine Schrägansicht einer Halterung und die Fig. 2 und 3 Seitenansichten eines in die Halterung eingesetzten Abscheiders mit geöffneter und verriegelter Stellung.

Eine Halterung 1 für einen eine Zentrifuge umfassenden Abscheider weist einen ersten U-förmig ausgebildeten Teil 2 zur Montage an einer Wand od.dgl. auf, der mit Leitungsanschlüssen 6 versehen ist, an die bei der Montage verschiedene Leitungen angeschlossen werden (abgesaugtes Gemisch, aus einer Speischale abfließendes Gemisch, Reinluft, gereinigtes Abwasser usw.) Ein zweiter, ebenfalls U-förmiger Teil 3 ist innerhalb des ersten Teiles 2 angeordnet und am ersten Teil 2 ausschließlich über vibrationsdämpfende Zwischenstücke 4,5 aus einem elastischen Material gehalten. Die Zwischenstücke 4,5 bestehen insbesondere aus einem thermoplastischen Elastomer, wobei die Zwischenstücke 5 elastische Rohrstücke bilden.

Zumindest die Seitenstege 8 des inneren U-förmigen Teiles 3 verjüngen sich zum freien Ende hin. Sie sind mit hintergreifbaren Stegen versehen und weisen Paßsitzflächen 9 auf. Am Abscheidergehäuse 11 sind gegengleiche Halteelemente 15 und Paßsitzflächen vorgesehen und das aufgeschobene Abscheidergehäuse 11 wird mittels eines Spannhebelverschlusses 17 am inneren Teil 3 verriegelt. Ein Griff ist dazu am Abscheidergehäuse 11 in einer Gleitführung 12 entlang des unterhalb des Gehäuses 11 abnehmbar angeordneten Sammelbehälters 14 für abgeschiedene Feststoffe gleitend geführt und wird von zwischen dem Griff und dem Abscheidergehäuse 11 eingespannten Druckfedern 13 beaufschlagt. Rastelemente 16 an beiden Seiten des Griffes hintergreifen an den freien Enden der Stege 8 angeordnete Laschen 10 und arretieren das Abscheidergehäuse 11. Zumindest ein Teil der vibrationsdämpfenden Zwischenstücke sind als elastische Rohrstücke 5 ausgebildet, die am inneren Halterungsteil 3 in einer der Paßsitzflächen 9 münden, und am äußeren Halterungsteil 2 mit den Leitungsanschlüssen 6 verbunden sind. Im Eckbereich angeordnete elastische Rohrstücke 5 sind eckwinkelig ausgebildet und sind mit zwei Leitungsanschlüssen 6 verbunden, von denen der eine im Seitensteg und der andere im Mittelsteg des äußeren Halterungsteiles 2 ausgebildet sind. Die Leitungsanschlüsse 6 sind nur schematisch gezeigt und können als Einsteckmuffen oder als Aufsteckrohrstutzen ausgebildet sein. Wenn die Seitenstege des äußeren Halterungsteiles 2 unter 45° schräg verlaufen, kann außen ein 45°-Winkelstück angesetzt werden, sodaß durch Verdrehen des Winkelstückes ein horizontaler bis vertikaler Anschluß möglich wird. Überzählige Leitungsanschlüsse 6 sind durch einen Stopfen od.dgl. verschließbar. Die Mündungen der elastischen Rohrwinkel 5 in der Paßsitzfläche 9 sind bevorzugt von Dichtungen 7 umgeben, die durch in Rillen eingesetzte O-Ringe gebildet oder aus dem thermoplastischen Elastomer der Zwischenstücke 4,5 mitgefertigt sind. Eine elektrische Steckverbindung ist bevorzugt am Mittelsteg des inneren Halteteiles 3 ausgebildet, sodaß diese ebenso wie die Strömungswege zwischen den Rohrwinkeln 5 und den Ein- oder Ausgängen des Abscheiders bei Abnahme des Abscheiders vom vibrationsdämpfend angeordneten inneren Halteteil 3 unterbrochen und beim Aufsetzen des Abscheiders auf den inneren Halteteil 3 wieder hergestellt werden.

## Patentansprüche

1. Vibrationsdämpfende Halterung für einen Dentalabscheider, der mindestens einen Eingang, mindestens einen Ausgang, und eine Zentrifuge aufweist, wobei die Halterung (1) mit Leitungsanschlüssen (6) versehen ist, und jeder Ein- und Ausgang des in die Halterung (1) eingesetzten Abscheiders mit einem Leitungsanschluß (6) der Halterung (1) verbunden ist, dadurch gekennzeichnet, daß die Halterung (1) zwei Teile (2,3) aufweist, wobei der erste Teil (2) ortsfest montierbar und auf dem zweiten Teil (3) der Abscheider abnehmbar anordenbar ist, und daß die beiden Teile (2,3) mittels vibrationsdämpfender Zwischenstücke (4,5) miteinander verbunden sind.

2. Halterung nach Anspruch 1, dadurch gekennzeichnet, daß zumindest ein vibrationsdämpfendes Zwischenstück als Rohrstück (5) zwischen einer einem Eingang bzw. Ausgang des Abscheiders zugeordneten Öffnung im zweiten Teil (3) und einem Leitungsanschluß (6) im ersten Teil (2) der Halterung ausgebildet ist.

3. Halterung nach Anspruch 1, dadurch gekennzeichnet, daß das Rohrstück (5) elastisch ist.

4. Halterung nach Anspruch 2, dadurch gekennzeichnet, daß das Rohrstück beweglich an beiden Teilen (2, 3) der Halterung (1) angeordnet ist.

5. Halterung nach einem der Ansprüche 1 bis 4, dadurch gekennzeichnet, daß die beiden Teile (2,3) der Halterung (1) im wesentlichen U-förmig ausgebildet sind, wobei der mit dem Abscheider verbindbare zweite Teil (3) mit Abstand innerhalb des ortsfest montierbaren ersten Teiles (2) angeordnet ist.

6. Halterung nach Anspruch 5, dadurch gekennzeichnet, daß die Seitenstege (8) des U-förmigen inneren Teiles (3) eine Seitenführung für einen schubladenartig ausziehbaren Abscheider bilden.

7. Halterung nach Anspruch 6, dadurch gekennzeichnet, daß an den freien Enden des U-förmigen inneren Teiles (3) der Halterung (1) hintergreifbare Haltelaschen (10) für einen Spannhebelverschluß (17) ausgebildet sind.

8. Halterung nach Anspruch 5 oder 6, dadurch gekennzeichnet, daß die Seitenstege des U-förmigen inneren Teiles (3) in Abnahmerichtung des Abscheiders konvergierende Paßsitzflächen (9) aufweisen, die von korrespondierenden Elementen (15) des Abscheidergehäuses (11) umgreifbar sind.

9. Halterung nach Anspruch 3 und 7, dadurch gekennzeichnet, daß zumindest ein elastisches Rohrstück (5) in einer Paßsitzfläche (9) mündet.

10. Halterung nach Anspruch 9, dadurch gekennzeichnet, daß zumindest ein elastisches Rohrstück (5) in einem Eckbereich der Halterung (1) angeordnet und mit zwei in verschiedene Richtungen weisenden Leitungsanschlüssen (6) verbunden ist.

11. Halterung nach einem der Ansprüche 1 bis 10, dadurch gekennzeichnet daß die Halterung (1) einstückig aus zwei Kunststoffen mit verschiedenen Eigenschaften gefertigt ist, wobei die vibrationsdämpfenden Zwischenstücke (4,5) aus einem thermoplastischen Elastomer bestehen.

## Claims

1. A vibration-damping support for a dental separator, which has at least one inlet, at least one outlet, and a centrifuge, wherein the support (1) is provided with line connections (6), and each inlet and outlet of the separator inserted into the support (1) communicates with a line connection (6) of the support (1), characterized in that the support (1) has two parts (2, 3), wherein the first part (2) can be mounted in stationary fashion and can be disposed removably on the second part (3) of the separator, and that the two parts (2, 3) are jointed together by means of vibration-damping intermediate components (4, 5).

2. A support according to claim 1, characterized in that at least one vibration-damping intermediate component is embodied as a tube section (5) between an aperture, associated with an inlet or outlet of the separator, in the second part (3) and a line connection (6) in the first part (2) of the support.

3. A support according to claim 1, characterized in that the tube section (5) is elastic.

4. A support according to claim 2, characterized in that the tube section is disposed movably on both parts (2, 3) of the support (1).

5. A support according to one of claims 1-4, characterized in that the two parts (2, 3) of the support (1) are embodied essentially in the shape of a U, wherein the second part (3) connectable to the separator is disposed, spaced apart, inside the first part (2) that is mounted in stationary fashion.

6. A support according to claim 5, characterized in that the side ridges (8) of the U-shaped inner part (3) form a lateral guide for a separator that can be pulled out in drawerlike fashion.

7. A support according to claim 6, characterized in that retaining tabs (10) which can be engaged from behind for a tightening lever closure (17) are formed on the free ends of the U-shaped inner part (3) of the support (1).

8. A support according to claim 5 or 6, characterized in that the side ridges of the U-shaped inner part (3) have tight-fit faces (9) that converge in the direction of removal of the separator and that can be engaged around the outside by corresponding elements (15) of the separator housing (11).

9. A support according to claims 3 and 7, characterized in that at least one elastic tube section (5) opens into a tight fit face (9).

10. A support according to claim 9, characterized in that at least one elastic tube section (5) is disposed in a corner region of the support (1) and communicates with two line connections (6) pointing in different directions.

11. A support according to one of claims 1-10, characterized in that the support (1) is manufactured in one piece from two plastics with different properties, wherein the vibration-damping intermediate components (4, 5) comprise a thermoplastic elastomer.

## Revendications

1. Attache amortissant les vibrations pour un séparateur dentaire qui présente au moins une entrée, au moins une sortie et une centrifugeuse, l'attache (1) étant pourvue de raccordements de conduites (6) et chaque entrée et chaque sortie du séparateur placé dans l'attache (1) étant reliées à un raccordement de conduite (6) de l'attache (1), caractérisée en ce que l'attache (1) comprend deux éléments (2, 3), le premier (2) étant apte à être monté de façon stationnaire tandis que le séparateur est apte à être disposé, amovible, sur le second (3), et en ce que les deux éléments (2, 3) sont reliés à l'aide de pièces intermédiaires amortissant les vibrations (4, 5).

2. Attache selon la revendication 1, caractérisée en ce qu'au moins une pièce intermédiaire amortissant les vibrations est conçue comme une pièce tubulaire (5) entre une ouverture prévue dans le second élément (3) et associée à une entrée ou une sortie du séparateur, et un raccordement de conduite (6) prévu dans le premier élément (2) de l'attache.

3. Attache selon la revendication 1, caractérisée en ce que la pièce tubulaire (5) est élastique.

4. Attache selon la revendication 2, caractérisée en ce que la pièce tubulaire est disposée, mobile, au niveau des deux éléments (2, 3) de l'attache (1).

5. Attache selon l'une des revendications 1 à 4, caractérisée en ce que les deux éléments (2, 3) de l'attache (1) ont globalement la forme d'un U, le second élément (3) apte à être relié au séparateur étant disposé avec un certain espacement à l'intérieur du premier élément (2) apte à être monté de façon stationnaire.

6. Attache selon la revendication 5, caractérisée en ce que les branches latérales (8) de l'élément intérieur en U (3) forment un guidage latéral pour un séparateur apte à être enlevé à la manière d'un tiroir.

7. Attache selon la revendication 6, caractérisée en ce qu'il est prévu, sur les extrémités libres de l'élément intérieur en U (3) de l'attache (1), des pattes de retenue (10), prévues pour une fermeture à levier de serrage (17), derrière lesquelles des éléments peuvent venir en prise.

8. Attache selon la revendication 5 ou 6, caractérisée en ce que les branches latérales de l'élément intérieur en U (3) présentent des surfaces d'ajustement (9) qui convergent dans le sens de démontage du séparateur et autour desquelles des éléments correspondants (15) de l'enveloppe de séparateur (11) peuvent venir en prise.

9. Attache selon les revendications 3 et 7, caractérisée en ce qu'au moins une pièce tubulaire élastique (5) débouche dans une surface d'ajustement (9).

10. Attache selon la revendication 9, caractérisée en ce qu'au moins une pièce tubulaire élastique (5) est disposée dans une zone d'angle de l'attache (1) et est reliée à deux raccordements de conduites (6) prévus dans des directions différentes.

11. Attache selon l'une des revendications 1 à 10, caractérisée en ce que l'attache (1) est réalisée d'une seule pièce à partir de deux matières plastiques présentant des propriétés différentes, les pièces intermédiaires amortissant les vibrations (4, 5) se composant d'un élastomère thermoplastique.
